Europäisches Patentamt

European Patent Office

Office européen des brevets

(11) Publication number: **0 105 855**
**B1**

# (12) EUROPEAN PATENT SPECIFICATION

(45) Date of publication of patent specification: **16.08.90**

(21) Application number: **83850261.5**

(22) Date of filing: **30.09.83**

(51) Int. Cl.⁵: **H 02 P 5/40,** H 02 P 7/62, H 02 K 17/22

(54) **An electric drive system.**

(30) Priority: **05.10.82 SE 8205674**

(43) Date of publication of application:
**18.04.84 Bulletin 84/16**

(45) Publication of the grant of the patent:
**16.08.90 Bulletin 90/33**

(84) Designated Contracting States:
**AT BE CH DE FR GB IT LI LU NL**

(56) References cited:
**DE-B-1 210 947**
**DE-B-1 255 777**
**DE-B-1 290 627**

(73) Proprietor: **TÖRÖK, Vilmos**
**Carl Milles väg 7**
**S-181 34 Lidingö (SE)**

(72) Inventor: **TÖRÖK, Vilmos**
**Carl Milles väg 7**
**S-181 34 Lidingö (SE)**

(74) Representative: **Carminger, Lars**
**Carminger, Uusitalo & Nyberg Patentbyra AB**
**Box 19055**
**S-104 32 Stockholm (SE)**

Courier Press, Leamington Spa, England.

## Description

The present invention relates to an electric drive system which comprises a slip-ring induction motor, the stator winding of which is supplied from a direct-current source through a machine-commutated static coverter (DE—B— 1 210 947, DE—B—1 290 627, DE—B—1 255 777).

The drive system according to the invention has primarily been developed for operating electric traction vehicles, but can also be used in other connections, for example in the operation of various industrial machines. The development of hydrostatic transmission systems and the wide advances made in such systems has meant that electro-hydraulic drive systems for vehicle operation are becoming of more and more interest. With present day hydrostatic transmission systems, it is possible to attain both highly advanced control functions and requisite hydraulic monitoring functions, and hence very modest demands are placed on the electric drive of the hydraulic pumps incorporated in the system. An important characteristic of these electro-hydraulic drive systems is that the electric drive motors need not be started electrically, but can be started mechanically by means of a hydraulic motor supplied from a hydraulic accumulator. Similar views exist in respect of such vehicle-drive systems as those which include a fly wheel, for leveling variations in the power requirements of the vehicle at varying loads and at acceleration and retardation, these vehicle-drive systems also becoming of greater interest. Consequently, in this context the most desirable properties of the electric drive system is reliability in operation, simplicity and cheapness. The most obvious alternative is a direct-current motor which is supplied either direct from a source of direct current, for example in vehicle operation with d.c. contact line, or via a transformer and an uncontrolled rectifier bridge, for example in vehicle operation with an a.c. contact line. Although such an electric drive system fulfills all requirements with respect to simplicity and cheapness, it is not, however, satisfactory with regard to reliability, due to the problems associated with the commutator of the direct-current motor. With respect to operational reliability, a brushless drive system having a short-circuited induction motor would be ideal. The demands of simplicity and cheapness, however, would be harder to satisfy in this case.

Consequently, the object of the present invention is to provide an electric drive system which is inexpensive, simple and reliable, and which can be used to advantage for various operational functions.

The drive system according to the invention includes a slip-ring induction motor having a direct-current excited rotor and a stator which is supplied through a machine-commutated static converter in a known manner from a direct-current source, which may consist of a direct-current mains, for example in vehicle operation with a d.c. contact line, or of an uncontrolled rectifier bridge connected to an alternating-current mains, for example in vehicle operation with an a.c. contact line. According to the invention, the direct-current supply to the static converter, when the motor is under load, is also used for the rotor excitation in that the rotor winding is connected to the direct-current source in series with the static converter. The required no load excitation of the rotor is achieved by means of separate excitation means. In this way, it is possible to start the motor mechanically up to full voltage, before it is connected to the supplying direct-current source, which facilitates this connection. In accordance with the invention the necessary no load excitation can be achieved by two different methods. According to one method, a condenser bank is connected to the stator winding of the motor, whereupon the condenser bank provides the no load excitation. According to the other method, the no load excitator is achieved through a rectifier connected to an alternating-current source, the direct-current outlets of the rectifier being connected across the rotor winding.

The drive system according to the invention fulfills requirements on simplicity and cheapness, and also on operational reliability, since operational experience with slip rings in long-term operations have been excellent.

The invention will now be described in more detail with reference to the accompanying drawing in which

Fig. 1 is a simplified circuit diagram of a first embdoiment of the invention, in which no load excitation is achieved by means of a condenser bank; and

Fig. 2 is a circuit diagram of a second embodiment of the invention, in which the no load excitation is achieved by means of a rectifier bridge connected to an alternating-current source.

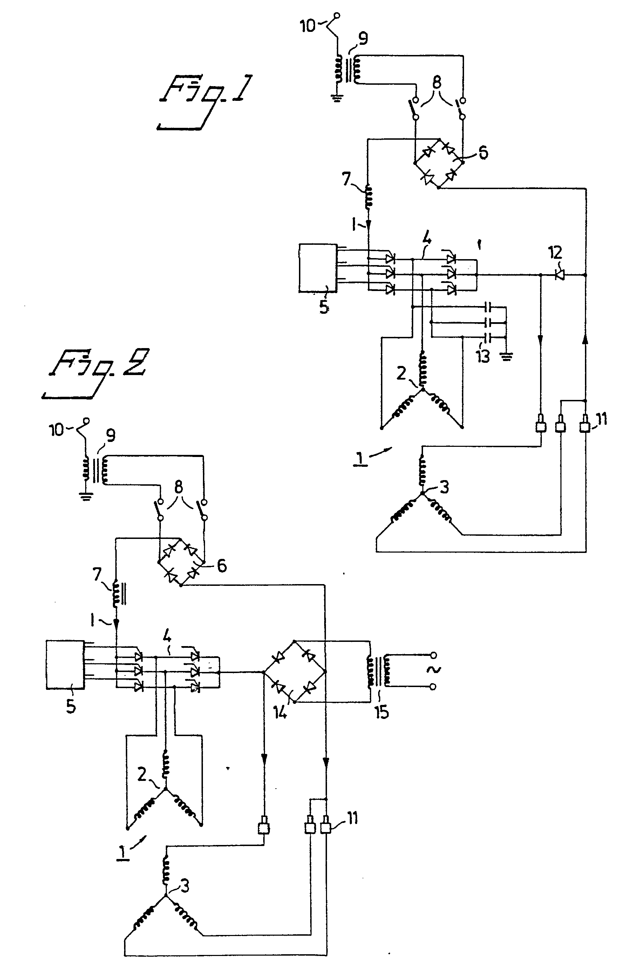

Fig. 1 illustrates by way of example a simplified circuit diagram of a first embodiment of a drive system according to the invention, intended for electric vehicle operation with an a.c. contact line. The electric drive system according to the invention includes a slip-ring induction motor, generally shown at 1, comprising a stator having a stator winding 2, and a rotor having a rotor winding 3. The stator winding 2 is supplied with current from a machine-commutated static converter 4, provided with a control unit 5 and connected to the direct-current terminals of a diode rectifier bridge 6, through a smoothing inductor 7. The alternating-current terminals of the rectifier bridge 6 are connected, via a contactor 8, to the secondary winding of a main transformer 9, the primary winding of which is connected to the current collector 10 of the vehicle. The rotor of the induction motor 1 is direct-current excited and when the motor operates under load the rotor winding 3 obtains its excitation current mainly from the current I supplied to the static-converter bridge 4, due to the fact that the rotor winding 3 is connected, via its slip-rings 11, to the direct-current terminals of the rectifier bridge 6, in series with the static converter 4. A diode 12 is connected in parallel across the rotor winding 3, to suppress reverse voltages occurring thereacross.

When there is no load on the induction motor 1 and the motor is started-up mechanically, the necessary no load excitation of the rotor is effected by the fact that a condenser bank 13 is connected to the stator winding 2, this condenser bank providing the necessary no load excitation.

The only difference between the embodiment illustrated in Fig. 1 and the embodiment of a drive system according to the invention illustrated in Fig. 2 resides in the arrangements for the no load excitation of the rotor winding 3. Like components in Figs. 1 and 2 are identified by the same reference numbers. In the embodiment illustrated in Fig. 2, no load excitation of the rotor winding 3 is obtained by connection of the winding, via its slip-rings 11, to the direct-current terminals of the diode rectifier bridge 14, which is connected in series with the static converter 4 to the direct-current terminals of the rectifier bridge 6. The alternating-current terminals of the rectifier bridge 14 are connected to the secondary winding of an auxiliary transformer 15, the primary winding of which is connected to a suitable alternating-current source.

It will be seen that a drive system according to the invention is extremely simple and inexpensive, and should also be highly reliable in operation, since excellent experiencies have been had wwith the long-term operation of slip-ring motors.

It will also be seen that if the drive system according to the invention is to be supplied from a direct-current mains, for example in vehicle operation with a d.c. contact-line, the diode rectifier bridge 6 and the main transformer 9 are not required.

If a drive system according to the invention designed in accordance with Fig. 2 is connected to an alternating-current mains having sufficiently high frequency, for example 50 Hz, the motor can also be started electrically, via the static converter 4 in a manner known per se, whereupon the requisite no load excitation of the rotor is obtained, also in this case, via the rectifier bridge 14 from the auxiliary transformer 15.

## Claims

1. An electric drive system including a slip-ring induction motor (1), the stator winding (2) of which is supplied from a direct-current source (6) via a machine-commutated static converter (4), characterized in that the rotor winding (3) of the induction motor is connected to the direct-current source (6) in series with the static converter (4), so that the supply current (I) from the direct-current source (6) to the static converter (4) also passes through the rotor winding (3) of the motor and provides requisite excitation of the rotor when operating under load, and in that separate means (13; 14, 15) are provided for the excitation of the rotor in no load conditions.

2. A drive system according to claim 1, characterized in that said means for no load excitation includes a condenser bank (13) connected to the stator winding (2) of the motor.

3. A drive system according to claim 1, characterized in that said means for no load excitation includes a rectifier bridge (14) supplied from an alternating-current source (15), the direct-current terminals of the rectifier bridge being connected across the rotor winding (3).

4. A drive system according to anyone of claims 1—3, characterized in that it includes means for mechanically starting the induction motor (1).

5. A drive system according to anyone of claims 1—4, characterized in that the direct-current source comprises a rectifier bridge (6) supplied from an alternating-current mains.

## Patentansprüche

1. Elektrisches Antriebssystem mit einem Schleifringinduktionsmotor (1), dessen Statorwicklung (2) von einer Gleichstromquelle (6) über einen maschinenkommutierten statischen Umformer (4) versorgt wird, dadurch gekennzeichnet, daß die Läuferwicklung (3) des Induktionsmotors an die Gleichstromquelle (6) in Reihe mit dem statischen Umformer (4) angeschlossen ist, so daß der Versorgungsstrom (I) aus der Gleichstromquelle (16) zum statischen Unformer (4) ebenso durch die Läuferwicklung (3) des Motors fleißt und eine notwendige Erregung des Läufers im Lastbetrieb bewirkt, und daß getrennte Mittel (13, 14, 15) für die Erregung des Läufers im Leerlaufbetrieb vorgesehen sind.

2. Antriebssystem nach Anspruch 1, dadurch gekennzeichnet, daß das Mittel für die Leerlauferregung eine mit der Statorwicklung (2) des Motors verbundene Kondensatorbatterie (13) umfaßt.

3. Antriebssystem nach Anspruch 1, dadurch gekennzeichnet, daß das Mittel für die Leerlauferregung eine von einer Wechselstromquelle (15) versorgte Gleichrichterbrücke (14) umfaßt, wobei die Gleichstromanschlüsse der Gleichrichterbrücke über die Läuferwicklung (3) verbunden sind.

4. Antriebssystem nach einem der Ansprüche 1 bis 3, dadurch gekennzeichnet, daß es Mittel für den mechanischen Start des Induktionsmotors (1) umfaßt.

5. Antriebssystem nach einem der Ansprüche 1 bis 4, dadurch gekennzeichnet, daß die Gleichstromquelle eine von einem Wechselstromnetz gespeiste Gleichrichterbrücke (6) umfaßt.

## Revendications

1. Système d'entraînement électrique comportant un moteur à induction à bague collectrice (1), dont l'enroulement de stator (2) est alimenté à partir d'une source de courant continu (6) par l'intermédiaire d'un convertisseur statique à commutation mécanique (4), caractérisé en ce que l'enroulement de rotor (3) du moteur à induction est raccordé en série à la source de courant continu (6) en série avec le convertisseur statique (4) de telle sorte que le courant (I) alimentant le convertisseur statique (4) à partir de la source de courant continu (6) passe également à travers l'enroulement de rotor (3) du moteur et procure l'excitation nécessaire du rotor en fonctionnement sous charge et en ce que des moyens séparés (13, 14, 15) sont prévus pour exciter le rotor en fonctionnement à vide.

2. Système d'entraînement selon la revendication 1, caractérisé en ce que les moyens pour l'excitation à vide comportent une batterie de condensateurs (13) raccordée à l'enroulement de stator (2) du moteur.

3. Système d'entraînement selon la revendication 1, caractérisé en ce que les moyens pour l'excitation à vide comportent un pont redresseur (14) alimenté par une source de courant alternatif (15), les bornes courant continu du pont redresseur étant reliées aux bornes de l'enroulement de rotor (3).

4. Système d'entraînement selon l'une quelconque des revendications 1 à 3, caractérisé en ce qu'il comporte des moyens pour démarrer mécaniquement le moteur à induction (1).

5. Système d'entraînement selon l'une quelconque des revendications 1 à 4, caractérisé en ce que la source de courant continu comporte un pont redresseur (6) alimenté par un secteur alternatif.

Fig.1

Fig.2